(19) Europäisches Patentamt
European Patent Office
Office européen des brevets

(11) Veröffentlichungsnummer: **0 554 695 A1**

(12) # EUROPÄISCHE PATENTANMELDUNG

(21) Anmeldenummer: **93100630.8**

(22) Anmeldetag: **16.01.93**

(51) Int. Cl.[5]: **C09B 29/085**, C09B 43/42, C09B 67/22

(30) Priorität: **01.02.92 DE 4202870**

(43) Veröffentlichungstag der Anmeldung: **11.08.93 Patentblatt 93/32**

(84) Benannte Vertragsstaaten: **BE CH DE ES FR GB GR IT LI**

(71) Anmelder: **HOECHST MITSUBISHI KASEI CO., LTD.**
**10-33, Akasaka 4-chome**
**Minato-ku, Tokyo(JP)**

(72) Erfinder: **Bühler, Ulrich, Dr.**
**Kastanienweg 8**
**W-8755 Alzenau(DE)**

(74) Vertreter: **Urbach, Hans-Georg, Dr. et al**
**CASSELLA AKTIENGESELLSCHAFT,**
**Patentabteilung, Hanauer Landstrasse 526**
**W-6000 Frankfurt am Main 60 (DE)**

(54) **Monoazofarbstoffe und diese enthaltende Mischungen.**

(57) Die vorliegende Erfindung betrifft Monoazofarbstoffe der allgemeinen Formel I

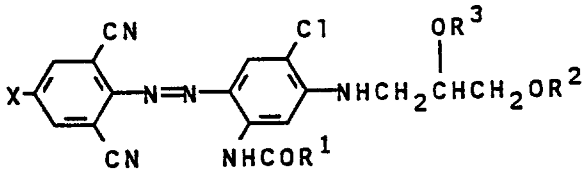

(I)

in der
X Methyl, Chlor oder Brom,
$R^1$ Ethyl, n-Propyl, i-Propyl, n-Butyl oder i-Butyl,
$R^2$ ($C_1$-$C_6$)-Alkyl, durch ($C_1$-$C_4$)-Alkoxy substituiertes lineares ($C_2$-$C_4$)-Alkyl, Allyl, Phenyl, Acetyl oder Propionyl und
$R^3$ Wasserstoff, Acetyl oder Propionyl
bedeuten, Mischungen die Farbstoffe der allgemeinen Formel I enthalten sowie die Herstellung dieser Farbstoffe und ihrer Mischungen und ihre Verwendung zum Färben von hydrophoben synthetischen Materialien, insbesondere für Automobilbezugsstoffe.

EP 0 554 695 A1

Die vorliegende Erfindung betrifft Monoazofarbstoffe, Mischungen die Monoazofarbstoffe enthalten, Verfahren zu ihrer Herstellung sowie ihre Verwendung zum Färben von hydrophoben synthetischen Materialien.

In der EP-A 43 795 sind bereits Farbstoffe beschrieben, die den erfindungsgemäßen Farbstoffen ähnlich sind. Allerdings sind diese mit anwendungstechnischen Nachteilen, insbesondere im Hinblick auf Aufbau- und Ausziehverhalten, verbunden. Daraus resultiert, daß beispielsweise keine großen Farbtiefen erreicht werden können und das Abwasser relativ stark belastet wird. Darüberhinaus führt eine relativ große Temperaturempfindlichkeit bei Schwankungen der Färbetemperatur leicht zu Farbtiefenschwankungen.

Aufgabe vorliegender Erfindung ist es, Farbstoffe mit verbesserten Eigenschaften im Hinblick auf die Farbstoffe der EP-A 43 795 bereitzustellen.

Die vorliegende Erfindung betrifft Monoazofarbstoffe der allgemeinen Formel I

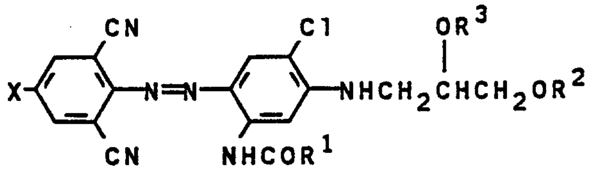

(I)

in der
X Methyl, Chlor oder Brom,
$R^1$ Ethyl, n-Propyl, i-Propyl, n-Butyl oder i-Butyl,
$R^2$ $(C_1\text{-}C_6)$-Alkyl, durch $(C_1\text{-}C_4)$-Alkoxy substituiertes lineares $(C_2\text{-}C_4)$-Alkyl, Allyl, Phenyl, Acetyl oder Propionyl und
$R^3$ Wasserstoff, Acetyl oder Propionyl
bedeuten.

Für $R^2$ stehendes $(C_1\text{-}C_6)$-Alkyl kann linear oder verzweigt sein und bedeutet beispielsweise Methyl, Ethyl, n-Propyl, i-Propyl, n-Butyl, sek-Butyl, i-Butyl, n-Pentyl, 3-Methylbutyl, n-Hexyl oder 2-Ethylbutyl.

Durch $(C_1\text{-}C_4)$-Alkoxy substituiertes lineares $(C_2\text{-}C_4)$-Alkyl ist beispielsweise 2-Methoxyethyl, 2-Ethoxyethyl, 2-n-Propoxyethyl, 2-i-Propoxyethyl, 2-n-Butoxyethyl, 2-i-Butoxyethyl, 4-Methoxybutyl oder 4-Ethoxybutyl.

In der allgemeinen Formel I bedeutet X bevorzugt Brom und insbesondere Chlor. $R^1$ bedeutet bevorzugt Ethyl, n-Propyl oder i-Propyl. $R^2$ bedeutet bevorzugt $(C_1\text{-}C_4)$-Alkyl, 2-Methoxyethyl, 2-Ethoxyethyl oder Allyl. $R^3$ bedeutet bevorzugt Wasserstoff. Bevorzugte Farbstoffe der allgemeinen Formel I sind solche, in denen X und $R^1$ bis $R^3$ bevorzugte Substituenten bedeuten.

Die vorliegende Erfindung betrifft auch Mischungen von mindestens zwei Monoazofarbstoffen der allgemeinen Formel I

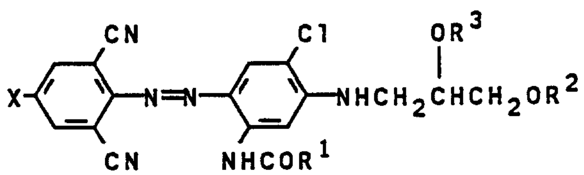

(I)

in der
X Methyl, Chlor oder Brom,
$R^1$ Methyl, Ethyl, n-Propyl, i-Propyl, n-Butyl oder i-Butyl,
$R^2$ $(C_1\text{-}C_6)$-Alkyl, durch $(C_1\text{-}C_4)$-Alkoxy substituiertes lineares $(C_2\text{-}C_4)$-Alkyl, Allyl, Phenyl, Acetyl oder Propionyl und
$R^3$ Wasserstoff, Acetyl oder Propionyl
bedeuten.

Bevorzugte erfindungsgemäße Mischungen enthalten Monoazofarbstoffe der allgemeinen Formel I mit bevorzugten Resten X, $R^1$, $R^2$ und $R^3$ bzw. mit $R^1$ = Methyl und bevorzugten Resten X, $R^2$ und $R^3$.

In besonders bevorzugten erfindungsgemäßen Mischungen unterscheiden sich die Monoazofarbstoffe der allgemeinen Formel I nur in der Bedeutung der Reste $R^1$.

In den erfindungsgemäßen Farbstoffmischungen kann das Verhältnis der verschiedenen Farbstoffe der allgemeinen Formel I in relativ weiten Grenzen variieren, und die Farbstoffe können als Kristallmischungen oder ganz oder teilweise in Form von Mischkristallen vorliegen. Im allgemeinen beträgt der Mindestgewichtsantil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70 : 30 bis 30 : 70 bevorzugt, d. h. der Gewichtsanteil eines Farbstoffs beträgt 30 bis 70 %.

In einer besonderen Ausführungsform der vorliegenden Erfindung sind die Farbstoffe der allgemeinen Formel I bzw. ihre Mischungen mit C.I. Solvent Orange 63 oder diesem ähnlichen Farbstoffen nuanciert.

Eine weitere besondere Ausführungsform der vorliegenden Erfindung betrifft Mischungen von einem oder mehreren der Farbstoffe der allgemeinen Formel I mit einem oder mehreren Farbstoffen, wie sie üblicherweise zum Färben von Polyesterfasern oder Polyestertextilmaterialien für Automobilbezugsstoffe verwendet werden. Die genannten Farbstoffe zum Färben von Automobilbezugsstoffen sind insbesondere Azo-, Disazo-, Anthrachinon-, Nitro-, Naphthalimid- und Terephthalimid-Farbstoffe. Besonders bevorzugte Farbstoffe dieser Art sind die Colour-Index-Farbstoffe Yellow 23, Yellow 42, Yellow 51, Yellow 59, Yellow 71, Yellow 86, Yellow 108, Yellow 122, Yellow 163, Yellow 182, Orange 29, Orange 30, Orange 32, Orange 41, Orange 45, Orange 61, Orange 73, Red 60, Red 86, Red 91, Red 92, Red 127, Red 134, Red 138, Red 159, Red 167, Red 191, Red 202, Red 258, Red 279, Red 284, Red 302, Red 323, Blue 27, Blue 54, Blue 56, Blue 60, Blue 77, Blue 79:1, Blue 87, Blue 266, Blue 333, Violet 27, Violet 28, Violet 57 und Violet 95.

Die Gewichtsverhältnisse der Farbstoffe der allgemeinen Formel I bzw. deren Mischungen und der genannten Farbstoffe sind völlig unkritisch und richten sich nach der gewünschten Farbnuance.

Die Herstellung der erfindungsgemäßen Farbstoffe der allgemeinen Formel I erfolgt vorzugsweise dadurch, daß man eine Verbindung der allgemeinen Formel II

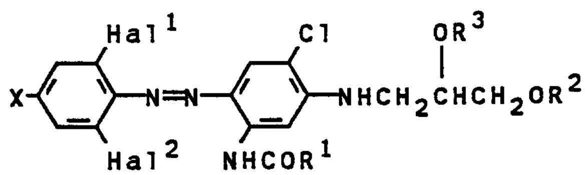

(II)

worin

$Hal^1$ und $Hal^2$ unabhängig voneinander Chlor oder vorzugsweise Brom bedeutet und $R^1$, $R^2$, $R^3$ und X wie oben angegeben definiert sind, einer nucleophilen Austauschreaktion unterwirft, wobei als nucleophiles Agenz das Cyanidion $CN^{\ominus}$ eingesetzt wird. Diese Reaktion, bei der für Hal stehendes Chlor oder Brom gegen CN ausgetauscht wird, wird bevorzugt nach den Angaben in der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821295, der DE-OS 2715034 oder der DE-OS 2134896 ausgeführt.

Die Herstellung der Verbindungen der allgemeinen Formel II erfolgt nach dem Fachmann bekannten Verfahren, vorzugsweise dadurch, daß man ein Amin der allgemeinen Formel III

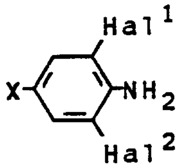

(III)

worin X und $Hal^1$ bzw. $Hal^2$ wie oben angegeben definiert sind, diazotiert und auf ein Amin der allgemeinen Formel IV

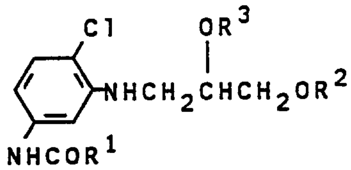

(IV)

worin $R^1$, $R^2$ und $R^3$ wie oben angegeben definiert sind, kuppelt.

Die Verbindungen der allgemeinen Formeln III und IV sind bekannt und können nach dem Fachmann bekannten Methoden hergestellt werden.

Die erfindungsgemäßen Farbstoffe der allgemeinen Formel I bzw. die erfindungsgemäßen Mischungen werden vor dem Färben formiert, d.h. sie werden in Gegenwart von Wasser und von Dispergiermitteln in geeigneten Mühlen, wie z.B. Kugel-oder Sandmühlen, gemahlen und, wenn eine pulverförmige Farbstoff-Formierung hergestellt werden soll, anschliessend sprühgetrocknet.

Geeignete Dispergiermittel sind z.B. anionische oder nichtionische Dispergiermittel, die auch gemeinsam eingesetzt werden können.

Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkylaryl-sulfonate, sowie Alkyl-aryl-polyglykolethersulfate.

Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an ($C_8$-$C_{10}$)-Alkylphenole.

Die Mahlung erfolgt bei Temperaturen zwischen 10 und 90°C, vorzugsweise bei 30 bis 60°C. Bei der gemeinsamen Formierung getrennt hergestellter Einzelkomponenten ist die gemeinsame Mahlung bei Temperaturen über 30°C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 $\mu$, vorzugsweise bei etwa 1 $\mu$.

Die erfindungsgemäßen Farbstoffmischungen können nach verschiedenen Verfahren hergestellt werden, z.B. durch Mischen der getrennt hergestellten Einzelfarbstoffe, wobei bevorzugt bereits formierte Einzelfarbstoffe gemischt werden. Dieser Mischprozeß erfolgt in geeigneten Mischern, wie z.B. Taumelmischern oder Rührwerken. Getrennt formierte Einzelfarbstoffe können aber auch durch Einrühren in Färbeflotten gemischt werden.

Erfindungsgemäße Farbstoffmischungen können weiterhin bevorzugt durch gemeinsame Formierung der getrennt hergestellten Mischungskomponenten, d.h. durch gemeinsame Mahlung und/ oder Sprühtrocknung, hergestellt werden.

Weiterhin können erfindungsgemäße Farbstoffmischungen bevorzugt durch Mischen der Farbstoffvorprodukte der allgemeinen Formel II und anschließendem gemeinsamen Cyanaustausch, wie oben beschrieben, hergestellt werden.

Die Zusammensetzung der Mischungen der Farbstoffvorprodukte der allgemeinen Formel II wird dabei so gewählt, daß erfindungsgemäße Mischungen entstehen. Die Formierung wird an dieses Verfahren, wie oben beschrieben, angeschlossen.

Sollen getrennt hergestellte Farbstoffe der allgemeinen Formel I gemeinsam formiert werden, so ist es vorteilhaft, vorher eine gemeinsame thermische Behandlung durchzuführen. Diese ist dadurch gekennzeichnet, daß man die Einzelfarbstoffe der allgemeinen Formel I gemeinsam, gegebenenfalls unter Druck, in Wasser eine halbe bis mehrere Stunden auf Temperaturen von 50 bis 150°C, vorzugsweise 90 bis 130°C, erhitzt und wieder abkühlt. Dieses Erhitzen erfolgt vorteilhaft in Gegenwart eines oder mehrerer Dispergiermittel oder eines organischen Lösungsmittels. Solche Lösungsmittel sind z.B. Methanol, Ethanol, Dimethylformamid oder Dimethylsulfoxid, vorzugsweise jedoch in Wasser wenig lösliche Lösungsmittel wie Toluol, Chlorbenzol, 1.2-Dichlorbenzol oder Butylacetat. Diese Lösungsmittel können nach der thermischen Behandlung wieder abdestilliert werden. Sie können aber auch durch Filtration und anschließendes Waschen der Mischung mit Wasser abgetrennt werden. An dieses Herstellungsverfahren kann sich dann die

Formierung der Mischung anschließen.

Besonders bevorzugt werden die getrennt hergestellten erfindungsgemäßen Farbstoffe der allgemeinen Formel I vor dem Formieren durch gemeinsames Lösen in einem organischen Lösungsmittel, Lösungsmittelgemisch oder einer Mineralsäure mit anschließendem Auskristallisieren und/oder Ausfällen, Isolieren, z.B. durch Filtration und Abtrennen von Lösungsmittelresten, z.B. durch Waschen, behandelt. Auch hier kann sich die Formierung der Mischung anschließen.

Bevorzugte organische Lösungsmittel sind dabei polare protische Lösungsmittel, wie Dimethylformamid, Dimethylsulfoxid oder N-Methylpyrrolidon. Es ist dabei vorteilhaft, die Mischungskomponente vollständig in Lösung zu bringen. Bei schwerer löslichen Mischungskomponenten kann das durch Erhöhung der Lösungsmittelmenge, der Lösetemperatur bzw. der Lösedauer erreicht werden. Um Lösungsmittelmengen einzusparen wird vorteilhaft bei erhöhter Temperatur gelöst und es kann bei Temperaturen bis hin zur Siedetemperatur des jeweiligen Lösungsmittels gearbeitet werden. Gegebenenfalls kann unter Druck die Temperatur auch darüber hinaus angehoben werden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2$^1/_2$-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen kann in an sich bekannter Weise erfolgen, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230°C mit HT-Dampf, Druckdampf oder Trockenhitze behandelt wird. Man erhält auf diese Weise sehr farbstarke brillante blaustichig rote Färbungen mit sehr guten Gebrauchsechtheiten, wie Thermofixier-, Wasch-, Wasser- und Thermomigrierechtheit sowie insbesondere einer sehr guten Lichtechtheit.

Die erfindungsgemäßen Farbstoffe und Farbstoffmischungen eignen sich ganz besonders zum Färben und Bedrucken von Polyesterfasern und Polyestertextilmaterialien für Automobilbezugsstoffe. Bevorzugt werden zu diesem Zweck die oben beschriebenen Farbstoffe der allgemeinen Formel I bzw. Mischungen davon mit einem oder mehreren Farbstoffen, wie sie üblicherweise zum Färben von Automobilbezugsstoffen verwendet werden, eingesetzt. Es ist darüberhinaus bevorzugt das Färben von Automobilbezugsstoffen in Gegenwart von UV-Absorbern auszuführen. Geeignete UV-Absorber sind beispielsweise solche auf Basis Benzophenon oder Benztriazol.

Einzelheiten zum Färben von Automobilbezugsstoffen sind beispielsweise in Textilveredelung 20 - (1985), Nr. 4, Seite 126, 20 (1985), Nr. 11, Seite 356 und 23 (1988), Nr. 5, Seite 170 beschrieben.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden. In den bei obigen Applikationen eingesetzten Färbeflotten und Druckpasten sollen die erfindungsgemäßen Farbstoffe bzw. Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat und insbesondere sogenannten "Säurespender" wie z.B. Butyrolacton, Monochloracetamid, Natriumchloracetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglykolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel und die oben genannten "Säurespender".

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5, eingestellt. Es ist vorteilhaft, den eingestellten pH-Wert abzupuffern und eine ausreichende Menge eines Puffersystems zuzusetzen. Ein vorteilhaftes Puffersystem ist z.B. das System Essigsäure/Natriumacetat.

Soll der Farbstoff oder die Farbstoffmischung für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die erfindungsgemäßen Farbstoffe und Farbstoffmischungen bieten im Vergleich zu den ähnlichen Farbstoffen der EP 43 795 überraschenderweise deutliche Vorteile, insbesondere bezüglich Aufbau- und Ausziehverhalten. Mit ihnen lassen sich größere Farbtiefen erzielen und sie sind ökonomischer, da sie vollständiger auf das Färbegut aufziehen und das Abwasser weniger stark belasten. Ihre Temperaturempfindlichkeit ist geringer, das heißt die Farbtiefenschwankungen bei Schwankungen der Färbetemperatur sind kleiner. Sie färben auch bei verkürzter Färbezeit und ziehen auf Substrate wie beispielsweise modifiziertes Polyester, Polyamid, Cellulosetriacetat und Cellulose-2 1/2-acetat auf. Ein weiterer Vorzug besteht darin daß sie aufgrund ihrer großen Farbtiefe und ihres besonders klaren Farbtons als Alternative zu C.I. Disperse Red 60 in Frage kommen und demgegenüber deutliche Kostenvorteile bieten. Aufgrund ihrer auch bei höherer Temperatur und Luftfeuchtigkeit hervorragenden Lichtechtheit sind sie weiterhin hervorragend geeignet zum Färben von Automobilbezugsstoffen, gegebenenfalls in Mischungen wie oben beschrieben.

Insgesamt ergibt sich somit für die erfindungsgemäßen Farbstoffe und Farbstoffmischungen ein nicht vorhersehbarer erheblicher anwendungstechnischer Vorteil im Vergleich zum Stand der Technik.

Die Erfindung wird durch die folgenden Beispiele näher erläutert. Prozentangaben sind Gewichtsprozente.

## Beispiel 1

In eine Suspension aus 100 ml Dimethylsulfoxid, 2,1 g Natriumcyanid und 7,1 g Kupfer-I-cyanid werden bei 70 bis 75°C 62,5 g des Farbstoffvorprodukts der Formel IIa

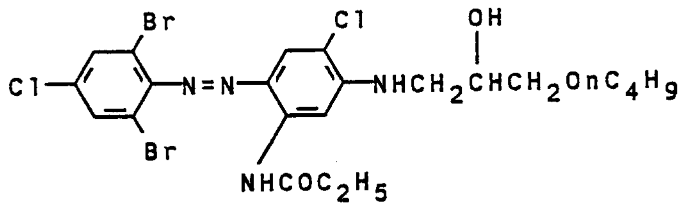 (IIa)

eingetragen und 30 min bei dieser Temperatur gerührt. Dann wird die Temperatur 30 min auf 110°C angehoben und der Ansatz anschließened langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 38,2 g des Farbstoffs der Formel Ia

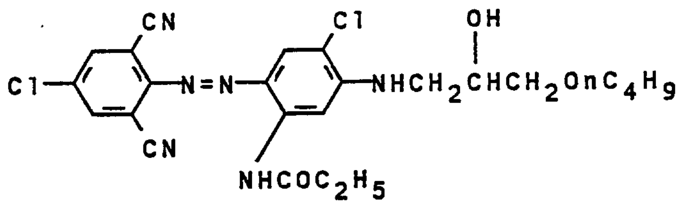

der bei 528 nm sein Absorptionsmaximum hat und sich in o-Dichlorbenzol mit roter Farbe löst.

0,6 g des so erhaltenen Farbstoffs werden in feindispergierter Form in 2000 g Wasser eingerührt. Die Dispersion wird mit Essigsäure und Natriumacetat auf einen pH-Wert 4,5 eingestellt und mit 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalats ein und färbt 45 min bei 130°C.

Nach anschließendem Spülen, reduktiver Nachbehandlung mit einer 0,2 %igen Natriumdithionitlösung während 15 min bei 70 bis 80 °C, Spülen und Trocknen erhält man eine farbstarke rote Färbung mit sehr guten coloristischen Eigenschaften, insbesondere sehr guter Licht- und Thermofixierechtheit.

Beispiel 2

Ersetzt man in Beispiel 1 die 62,5 g des Farbstoffvorprodukts der Formel IIa durch eine Mischung aus 30,1 g des Farbstoffvorprodukts der Formel IIb

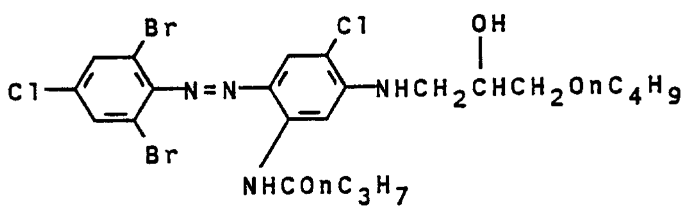 (IIb)

und 29 g des Farbstoffvorprodukts der Formel IIc

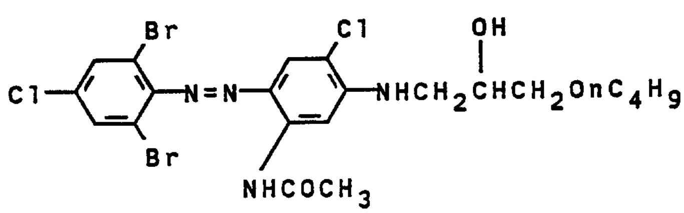 (IIc)

und verfährt weiter so, wie in Beispiel 1 beschrieben, so erhält man 44 g einer Mischung der Farbstoffe der Formel Ib

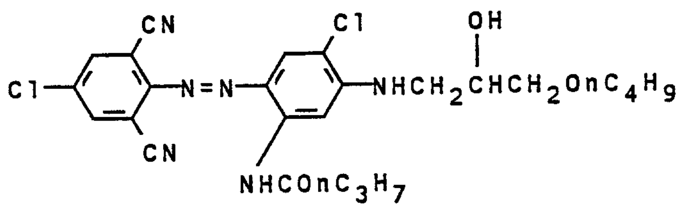

(Ib)

und der Formel Ic

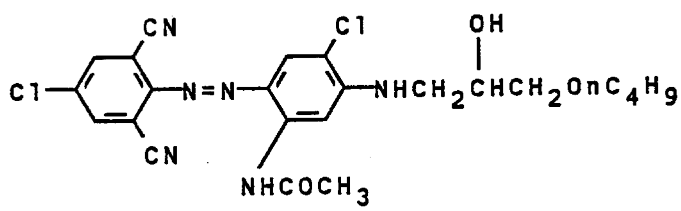

(Ic)

die sich ebenfalls in o-Dichlorbenzol mit roter Farbe löst.

1,3 g einer handelsüblichen Pulverpräparation von C.I. Disperse Yellow 42, 1 g einer handelsüblichen Pulverpräparation von C.I. Disperse Blue 27 und 0,1 g der oben beschriebenen Farbstoffmischung werden in 2000 g Wasser eingerührt. Die Dispersion wird mit 4 g Natriumacetat versetzt, mit Essigsäure auf einen pH-Wert von 5 gestellt und mit 4 g eines handelsüblichen Egalisierhilfsmittels auf Basis lineares anionisches Polykondensat sowie mit 3 g eines handelsüblichen UV-Absorbers auf Basis Benztriazol versetzt. In die so erhaltene Färbeflotte bringt man 100 eines Automobilbezugsstoffes auf Basis Polyethylenglykolterephthalat ein und färbt eine Stunde bei 130°C. Nach anschließendem Spülen, reduktiver Nachbehandlung, Spülen und Trocknen erhält man eine braune Färbung mit hervorragender Lichtechtheit.

Beispiel 3

15 g des Farbstoffs der Formel Ic werden in feiner Verteilung einer Druckpaste, die 45 g Johannisbrotkernmehl, 6 g 3-Nitrobenzosulfonsaures Natrium und 3 g Zitronensäure auf 100 g enthält, einverleibt. Wird Polyester mit dieser Druckpaste bedruckt, das bedruckte Gewebe nach dem Trocknen 15 min bei 1,5 atü Dampfdruck gedämpft, geseift, gespült und getrocknet, so erhält man einen farbstarken blaustichig roten Druck mit hervorragenden Echtheiten.

In der nachstehenden Tabelle I sind weitere erfindungsgemäße Farbstoffe sowie in der nachstehenden Tabelle II erfindungsgemäße Farbstoffmischungen angegeben, die auf Polyester ebenfalls farbstarke rote Färbungen und Drucke mit ebenfalls sehr guten coloristischen Eigenschaften liefern.

Die Farbtöne auf Polyester sind wie folgt definiert:

1 = blaustichig Rot
2 = Rot
3 = Scharlach

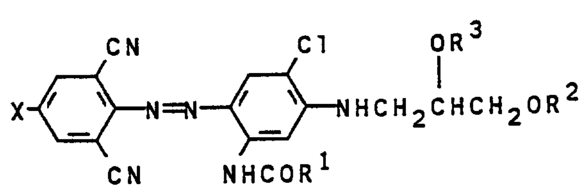

Tabelle I

| X | $R^1$ | $R^2$ | $R^3$ | Farbton auf Polyester |
|---|---|---|---|---|
| Cl | $iC_3H_7$ | $nC_4H_9$ | H | 1 |
| Cl | $nC_4H_9$ | $nC_4H_9$ | H | 1 |
| Br | $C_2H_5$ | $nC_4H_9$ | H | 1 |
| Br | $nC_3H_7$ | $nC_4H_9$ | H | 1 |
| Br | $nC_4H_9$ | $nC_4H_9$ | H | 1 |
| Br | $iC_4H_9$ | $nC_4H_9$ | H | 1 |
| $CH_3$ | $C_2H_5$ | $nC_4H_9$ | H | 3 |
| $CH_3$ | $nC_3H_7$ | $nC_4H_9$ | H | 3 |
| $CH_3$ | $iC_3H_7$ | $nC_4H_9$ | H | 3 |
| Cl | $C_2H_5$ | $COCH_3$ | H | 1 |
| Cl | $nC_3H_7$ | $CH_3$ | H | 1 |
| Cl | $nC_4H_9$ | $CH_3$ | H | 1 |
| Br | $nC_3H_7$ | $CH_3$ | H | 1 |
| Br | $iC_3H_7$ | $CH_3$ | H | 1 |
| $CH_3$ | $C_2H_5$ | $CH_3$ | H | 3 |
| Cl | $C_2H_5$ | $C_2H_5$ | H | 1 |
| Cl | $nC_3H_7$ | $C_2H_5$ | H | 1 |
| Cl | $iC_3H_7$ | $C_2H_5$ | H | 1 |
| Br | $nC_3H_7$ | $C_2H_5$ | H | 1 |
| Br | $nC_4H_9$ | $C_2H_5$ | H | 1 |
| $CH_3$ | $C_2H_5$ | $COC_2H_5$ | H | 3 |
| Cl | $nC_3H_7$ | $nC_3H_7$ | H | 1 |
| Cl | $C_2H_5$ | $nC_3H_7$ | H | 1 |
| Br | $C_2H_5$ | $nC_3H_7$ | H | 1 |
| Br | $nC_4H_9$ | $nC_3H_7$ | H | 1 |
| Cl | $iC_3H_7$ | $iC_3H_7$ | H | 1 |
| Br | $C_2H_5$ | $iC_3H_7$ | H | 1 |

| X | $R^1$ | $R^2$ | $R^3$ | Farbton auf Polyester |
|---|---|---|---|---|
| Cl | $C_2H_5$ | $i\text{-}C_4H_9$ | H | 1 |
| Cl | $nC_3H_7$ | $i\text{-}C_4H_9$ | H | 1 |
| Br | $C_2H_5$ | $i\text{-}C_4H_9$ | H | 1 |
| $CH_3$ | $iC_4H_9$ | $i\text{-}C_4H_9$ | H | 3 |
| Cl | $C_2H_5$ | sek.$C_4H_9$ | H | 1 |
| Cl | $iC_3H_7$ | sek.$C_4H_9$ | H | 1 |
| Br | $nC_4H_9$ | sek.$C_4H_9$ | H | 1 |
| Cl | $nC_3H_7$ | $nC_5H_{11}$ | H | 1 |
| Br | $C_2H_5$ | $nC_5H_{11}$ | H | 1 |
| Cl | $C_2H_5$ | $nC_6H_{13}$ | H | 1 |
| Br | $C_2H_5$ | $nC_6H_{13}$ | H | 1 |
| Cl | $C_2H_5$ | $CH_2CH{=}CH_2$ | H | 1 |
| Cl | $nC_3H_7$ | $CH_2CH{=}CH_2$ | H | 1 |
| Cl | $nC_4H_9$ | $CH_2CH{=}CH_2$ | H | 1 |
| Br | $iC_3H_7$ | $CH_2CH{=}CH_2$ | H | 1 |
| Br | $C_2H_5$ | $CH_2CH{=}CH_2$ | H | 1 |
| Br | $iC_4H_9$ | $CH_2CH{=}CH_2$ | H | 1 |
| $CH_3$ | $C_2H_5$ | $CH_2CH{=}CH_2$ | H | 3 |
| Cl | $nC_3H_7$ | $(CH_2)_2OCH_3$ | H | 1 |
| Cl | $iC_3H_7$ | $(CH_2)_2OCH_3$ | H | 1 |
| Cl | $nC_4H_9$ | $(CH_2)_2OCH_3$ | H | 1 |
| Br | $C_2H_5$ | $(CH_2)_2OCH_3$ | H | 1 |
| Br | $iC_4H_9$ | $(CH_2)_2OCH_3$ | H | 1 |
| $CH_3$ | $nC_3H_7$ | $(CH_2)_2OCH_3$ | H | 3 |
| Cl | $C_2H_5$ | $(CH_2)_2OC_2H_5$ | H | 1 |
| Cl | $nC_3H_7$ | $(CH_2)_2OC_2H_5$ | H | 1 |
| Br | $nC_3H_7$ | $(CH_2)_2OC_2H_5$ | H | 1 |
| Cl | $iC_3H_7$ | $(CH_2)_2OnC_3H_7$ | H | 1 |
| Br | $C_2H_5$ | $(CH_2)_2OiC_3H_7$ | H | 1 |
| Cl | $C_2H_5$ | $(CH_2)_2OnC_4H_9$ | H | 1 |
| $CH_3$ | $C_2H_5$ | $(CH_2)_2OnC_4H_9$ | H | 3 |
| Cl | $nC_3H_7$ | $(CH_2)_2OiC_4H_9$ | H | 1 |
| Br | $C_2H_5$ | $(CH_2)_2OsekC_4H_9$ | H | 1 |
| Cl | $iC_3H_7$ | $(CH_2)_3OCH_3$ | H | 1 |

| X | $R^1$ | $R^2$ | $R^3$ | Farbton auf Polyester |
|---|---|---|---|---|
| Cl | $C_2H_5$ | $(CH_2)_4OCH_3$ | H | 1 |
| Cl | $nC_3H_7$ | $(CH_2)_4OCH_3$ | H | 1 |
| Br | $C_2H_5$ | $(CH_2)_4OCH_3$ | H | 1 |
| Cl | $C_2H_5$ | $(CH_2)_4OC_2H_5$ | H | 1 |
| Br | $C_2H_5$ | $(CH_2)_4OnC_4H_9$ | H | 1 |
| Cl | $C_2H_5$ | $COCH_3$ | H | 2 |
| Cl | $nC_3H_7$ | $COCH_3$ | H | 2 |
| Cl | $nC_4H_9$ | $COCH_3$ | H | 2 |
| Br | $C_2H_5$ | $COCH_3$ | H | 2 |
| Br | $iC_3H_7$ | $COCH_3$ | H | 2 |
| $CH_3$ | $iC_4H_9$ | $COCH_3$ | H | 3 |
| Cl | $C_2H_5$ | $COC_2H_5$ | H | 2 |
| Cl | $iC_3H_7$ | $COC_2H_5$ | H | 2 |
| Br | $nC_3H_7$ | $COC_2H_5$ | H | 2 |
| Cl | $C_2H_5$ | $C_6H_5$ | H | 1 |
| Cl | $nC_3H_7$ | $C_6H_5$ | H | 1 |
| Br | $nC_3H_7$ | $C_6H_5$ | H | 1 |
| Cl | $C_2H_5$ | $C_2H_5$ | $COCH_3$ | 1-2 |
| Cl | $nC_3H_7$ | $C_2H_5$ | $COCH_3$ | 1-2 |
| Cl | $C_2H_5$ | $nC_4H_9$ | $COCH_3$ | 1-2 |
| Cl | $nC_3H_7$ | $nC_4H_9$ | $COCH_3$ | 1-2 |
| Cl | $iC_3H_7$ | $CH_2CH=CH_2$ | $COCH_3$ | 1-2 |
| Cl | $C_2H_5$ | $(CH_2)_2OCH_3$ | $COCH_3$ | 1-2 |
| Cl | $nC_3H_7$ | $(CH_2)_2OC_2H_5$ | $COCH_3$ | 1-2 |
| Cl | $C_2H_5$ | $C_6H_5$ | $COCH_3$ | 2 |
| Br | $C_2H_5$ | $COCH_3$ | $COCH_3$ | 2-3 |
| Br | $nC_3H_7$ | $C_2H_5$ | $COCH_3$ | 2 |
| Br | $nC_3H_7$ | $nC_4H_9$ | $COCH_3$ | 2 |
| Br | $C_2H_5$ | $nC_4H_9$ | $COCH_3$ | 2 |
| Br | $C_2H_5$ | $(CH_2)_2OCH_3$ | $COCH_3$ | 2 |
| Br | $nC_3H_7$ | $(CH_2)_2OCH_3$ | $COCH_3$ | 2 |
| $CH_3$ | $C_2H_5$ | $nC_4H_9$ | $COCH_3$ | 3 |
| $CH_3$ | $C_2H_5$ | $(CH_2)_2OCH_3$ | $COCH_3$ | 3 |

| X | $R^1$ | $R^2$ | $R^3$ | Farbton auf Polyester |
|---|---|---|---|---|
| Cl | $C_2H_5$ | $COC_2H_5$ | $COC_2H_5$ | 2-3 |
| Cl | $nC_3H_7$ | $CH_3$ | $COC_2H_5$ | 2 |
| Cl | $C_2H_5$ | $nC_4H_9$ | $COC_2H_5$ | 2 |
| Cl | $C_2H_5$ | $(CH_2)_2OCH_3$ | $COC_2H_5$ | 2 |
| Br | $C_2H_5$ | $nC_4H_9$ | $COC_2H_5$ | 2 |
| Br | $nC_3H_7$ | $CH_2CH=CH_2$ | $COC_2H_5$ | 2 |
| Br | $C_2H_5$ | $(CH_2)_2OCH_3$ | $COC_2H_5$ | 2 |
| $CH_3$ | $iC_3H_7$ | $nC_4H_9$ | $COC_2H_5$ | 3 |
| $CH_3$ | $nC_3H_7$ | $(CH_2)_2OCH_3$ | $COC_2H_5$ | 3 |

Tabelle II

| X | $R^1$ | $R^2$ | $R^3$ | Mischungsverhältnis | Farbton auf Polyester |
|---|---|---|---|---|---|
| Cl | $CH_3$ | $nC_4H_9$ | H | 50 | 1 |
| Cl | $C_2H_5$ | $nC_4H_9$ | H | 50 | |
| Cl | $CH_3$ | $nC_4H_9$ | H | 60 | 1 |
| Cl | $iC_3H_7$ | $nC_4H_9$ | H | 40 | |
| Cl | $CH_3$ | $COC_2H_5$ | H | 10 | 1 |
| Cl | $nC_3H_7$ | $C_2H_5$ | H | 90 | |
| Cl | $CH_3$ | $CH_2CH=CH_2$ | H | 35 | 1 |
| Cl | $C_2H_5$ | $CH_2CH=CH_2$ | H | 65 | |
| Cl | $CH_3$ | $(CH_2)_2OCH_3$ | H | 20 | 1 |
| Cl | $nC_3H_7$ | $(CH_2)_2OCH_3$ | H | 80 | |
| Cl | $C_2H_5$ | $(CH_2)_2OC_2H_5$ | H | 5 | 1 |
| Cl | $nC_3H_7$ | $(CH_2)_2OC_2H_5$ | H | 95 | |
| Cl | $C_2H_5$ | $nC_4H_9$ | H | 45 | 1 |
| Cl | $nC_3H_7$ | $nC_3H_7$ | H | 55 | |
| Cl | $C_2H_5$ | $nC_4H_9$ | H | 30 | 1-2 |
| Cl | $C_2H_5$ | $nC_4H_9$ | $COCH_3$ | 70 | |
| Cl | $nC_3H_7$ | $C_2H_5$ | H | 50 | 1 |
| Cl | $nC_3H_7$ | $nC_4H_9$ | H | 50 | |
| Cl | $C_2H_5$ | $(CH_2)_2OCH_3$ | H | 50 | 2 |
| Cl | $C_2H_5$ | $(CH_2)_2OC_2H_5$ | $COC_2H_5$ | 50 | |
| Cl | $C_2H_5$ | $nC_4H_9$ | $COCH_3$ | 95 | 1-2 |
| Cl | $iC_3H_7$ | $nC_4H_9$ | H | 5 | |

| X | $R^1$ | $R^2$ | $R^3$ | Mischungs-verhältnis | Farbton auf Polyester |
|---|---|---|---|---|---|
| Br | $CH_3$ | $CH_3$ | H | 15 | 1 |
| Br | $nC_3H_7$ | $CH_3$ | H | 85 | |
| Br | $CH_3$ | $nC_4H_9$ | H | 80 | 1 |
| Br | $C_2H_5$ | $nC_4H_9$ | H | 20 | |
| Br | $CH_3$ | $(CH_2)_2OCH_3$ | H | 67 | 1 |
| Br | $iC_3H_7$ | $(CH_2)_2OCH_3$ | H | 33 | |
| Br | $CH_3$ | $nC_4H_9$ | H | 98 | 1 |
| Br | $nC_4H_9$ | $COC_2H_5$ | H | 2 | |
| Br | $nC_3H_7$ | $nC_3H_7$ | H | 60 | 1-2 |
| Br | $nC_3H_7$ | $nC_3H_7$ | $COC_2H_5$ | 40 | |
| Br | $iC_3H_7$ | $COC_2H_5$ | H | 70 | 1-2 |
| Br | $iC_3H_7$ | $nC_4H_9$ | H | 30 | |
| Br | $C_2H_5$ | $CH_2CH=CH_2$ | H | 90 | 1 |
| Br | $C_2H_5$ | $(CH_2)_2OC_2H_5$ | $COCH_3$ | 10 | |
| Br | $C_2H_5$ | $(CH_2)_2OC_2H_5$ | H | 30 | 1-2 |
| Br | $nC_3H_7$ | $(CH_2)_2OC_2H_5$ | $COCH_3$ | 70 | |
| $CH_3$ | $CH_3$ | $(CH_2)_2OCH_3$ | H | 40 | 3 |
| $CH_3$ | $iC_4H_9$ | $(CH_2)_2OCH_3$ | H | 60 | |
| $CH_3$ | $CH_3$ | $nC_3H_7$ | H | 90 | 3 |
| $CH_3$ | $nC_3H_7$ | $nC_3H_7$ | H | 10 | |
| $CH_3$ | $C_2H_5$ | $nC_4H_9$ | H | 30 | 3 |
| $CH_3$ | $C_2H_5$ | $nC_4H_9$ | $COCH_3$ | 70 | |

| X | $R^1$ | $R^2$ | $R^3$ | Mischungsverhältnis | Farbton auf Polyester |
|---|---|---|---|---|---|
| $CH_3$ | $C_2H_5$ | $(CH_2)_2OCH_3$ | H | 60 | 3 |
| $CH_3$ | $iC_3H_7$ | $(CH_2)_4OCH_3$ | H | 40 | |
| Cl | $CH_3$ | $C_2H_5$ | H | 50 | 1 |
| Cl | $CH_3$ | $nC_4H_9$ | H | 50 | |
| Cl | $CH_3$ | $(CH_2)_2OCH_3$ | H | 70 | 1 |
| Cl | $CH_3$ | $(CH_2)_2OC_2H_5$ | H | 30 | |
| Cl | $CH_3$ | $nC_4H_9$ | H | 30 | 2 |
| Cl | $CH_3$ | $COCH_3$ | $COCH_3$ | 70 | |
| Br | $CH_3$ | $nC_3H_7$ | H | 55 | 1 |
| Br | $CH_3$ | $nC_5H_{11}$ | H | 45 | |
| Br | $CH_3$ | $(CH_2)_2OnC_4H_9$ | $COCH_3$ | 80 | 2 |
| Br | $CH_3$ | $(CH_2)_2OnC_4H_9$ | $COC_2H_5$ | 20 | |
| $CH_3$ | $CH_3$ | $(CH_2)_2OCH_3$ | H | 40 | 3 |
| $CH_3$ | $CH_3$ | $(CH_2)_4OC_2H_5$ | H | 60 | |
| Cl | $CH_3$ | $C_2H_5$ | H | 15 | 1 |
| Br | $CH_3$ | $C_2H_5$ | H | 85 | |
| Cl | $CH_3$ | $iC_3H_7$ | H | 85 | 1-2 |
| Br | $CH_3$ | $iC_3H_7$ | $COC_2H_5$ | 15 | |
| Cl | $C_2H_5$ | $nC_4H_9$ | H | 95 | 1 |
| Br | $C_2H_5$ | $nC_4H_9$ | H | 5 | |
| Cl | $nC_3H_7$ | $nC_3H_7$ | H | 20 | 1 |
| Br | $nC_3H_7$ | $CH_2CH=CH_2$ | H | 80 | |

| X | $R^1$ | $R^2$ | $R^3$ | Mischungs-verhältnis | Farbton auf Polyester |
|---|---|---|---|---|---|
| Cl | $CH_3$ | $CH_2CH=CH_2$ | H | 50 | 1 |
| Br | $CH_3$ | $CH_2CH=CH_2$ | H | 50 | |
| Cl | $CH_3$ | $C_2H_5$ | $COCH_3$ | 15 | 1-2 |
| Br | $nC_3H_7$ | $C_2H_5$ | H | 85 | |
| Cl | $nC_3H_7$ | $(CH_2)_2OC_2H_5$ | H | 55 | 1 |
| Br | $nC_3H_7$ | $(CH_2)_2OC_2H_5$ | H | 45 | |
| Cl | $C_2H_5$ | $nC_3H_7$ | $COCH_3$ | 45 | 1-2 |
| Br | $C_2H_5$ | $nC_3H_7$ | $COCH_3$ | 55 | |
| Cl | $C_2H_5$ | $nC_4H_9$ | H | 3 | 3 |
| $CH_3$ | $C_2H_5$ | $nC_4H_9$ | H | 97 | |
| Br | $iC_3H_7$ | $CH_3$ | $COCH_3$ | 50 | 2-3 |
| $CH_3$ | $iC_3H_7$ | $COCH_3$ | $COCH_3$ | 50 | |
| Cl | $CH_3$ | $CH_2CH=CH_2$ | H | 33 1/3 | |
| Cl | $C_2H_5$ | $CH_2CH=CH_2$ | H | 33 1/3 | 1 |
| Cl | $nC_3H_7$ | $CH_2CH=CH_2$ | H | 33 1/3 | |
| Cl | $C_2H_5$ | $C_2H_5$ | H | 30 | |
| Cl | $C_2H_5$ | $C_2H_5$ | $COCH_3$ | 60 | 2 |
| Cl | $CH_3$ | $COC_2H_5$ | $COCH_3$ | 10 | |
| Br | $C_2H_5$ | $nC_4H_9$ | H | 25 | |
| Br | $nC_3H_7$ | $nC_4H_9$ | H | 25 | 1 |
| Br | $nC_3H_7$ | $C_2H_5$ | H | 50 | |

| X | $R^1$ | $R^2$ | $R^3$ | Mischungsverhältnis | Farbton auf Polyester |
|---|---|---|---|---|---|
| Cl | $CH_3$ | $nC_6H_{13}$ | H | 40 | |
| Cl | $CH_3$ | $nC_3H_7$ | H | 30 | 1 |
| Br | $C_2H_5$ | $nC_6H_{13}$ | H | 30 | |
| | | | | | |
| Cl | $CH_3$ | $iC_4H_9$ | H | 45 | |
| Br | $CH_3$ | $iC_4H_9$ | H | 45 | 1 |
| Br | $CH_3$ | $COCH_3$ | H | 10 | |
| | | | | | |
| Cl | $CH_3$ | $nC_4H_9$ | H | 25 | |
| Cl | $nC_3H_7$ | $nC_4H_9$ | H | 25 | |
| Br | $CH_3$ | $nC_4H_9$ | H | 25 | 1 |
| Br | $nC_3H_7$ | $nC_4H_9$ | H | 25 | |

**Patentansprüche**

Monoazofarbstoffe der allgemeinen Formel I

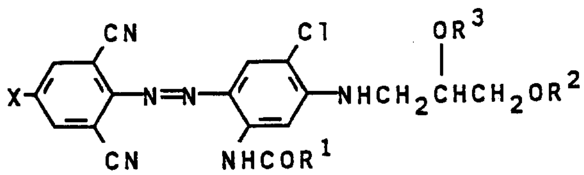

(I)

in der
X Methyl, Chlor oder Brom,
$R^1$ Ethyl, n-Propyl, i-Propyl, n-Butyl oder i-Butyl, $R^2$ ($C_1$-$C_6$)-Alkyl, durch ($C_1$-$C_4$)-Alkoxy substituiertes lineares ($C_2$-$C_4$)-Alkyl, Allyl, Phenyl, Acetyl oder Propionyl und
$R^3$ Wasserstoff, Acetyl oder Propionyl bedeuten.

**2**. Monoazofarbstoffe gemäß Anspruch 1, dadurch gekennzeichnet, daß
X Brom oder Chlor,
$R^1$ Ethyl, n-Propyl oder i-Propyl,
$R^2$ ($C_1$-$C_4$)-Alkyl, 2-Methoxyethyl, 2-Ethoxyethyl oder Allyl und
$R^3$ Wasserstoff
bedeuten.

**3**. Mischung von mindestens zwei Monoazofarbstoffen der allgemeinen Formel I

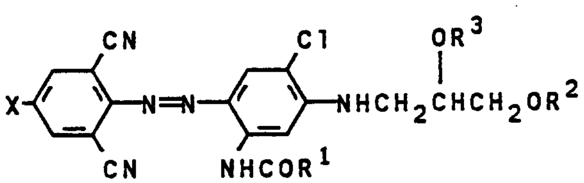

(I)

in der
X Methyl, Chlor oder Brom,
$R^1$ Methyl, Ethyl, n-Propyl, i-Propyl, n-Butyl oder i-Butyl,
$R^2$ ($C_1$-$C_6$)-Alkyl, durch ($C_1$-$C_4$)-Alkoxy substituiertes lineares ($C_2$-$C_4$)-Alkyl, Allyl, Phenyl, Acetyl oder Propionyl und
$R^3$ Wasserstoff, Acetyl oder Propionyl bedeuten.

**4**. Mischung gemäß Anspruch 3, dadurch gekennzeichnet, daß sich die Monoazofarbstoffe der allgemeinen Formel I nur in der Bedeutung von $R^1$ unterscheiden.

**5**. Monoazofarbstoff gemäß Anspruch 1 und/oder 2 sowie Mischung gemäß Anspruch 3 und/oder 4, dadurch gekennzeichnet, daß der Monoazofarbstoff bzw. die Mischung mit C.I. Solvent Orange 63 oder diesem ähnlichen Farbstoffen nuanciert ist.

**6**. Mischung von einem oder mehreren der Monoazofarbstoffe der allgemeinen Formel I mit einem oder mehreren Farbstoffen, wie sie üblicherweise zum Färben von Polyesterfasern oder Polyestertextilmaterialien für Automobilbezugsstoffe verwendet werden.

**7**. Mischung gemäß Anspruch 6, dadurch gekennzeichnet, daß die Farbstoffe zum Färben von Automobilbezugsstoffen Azo-, Disazo-, Anthrachinon-, Nitro-, Naphthalimid- oder Terephthalimid-Farbstoffe sind.

**8**. Verfahren zur Herstellung eines Monoazofarbstoffes der allgemeinen Formel I dadurch gekennzeichnet, daß man eine Verbindung der allgemeinen Formel II

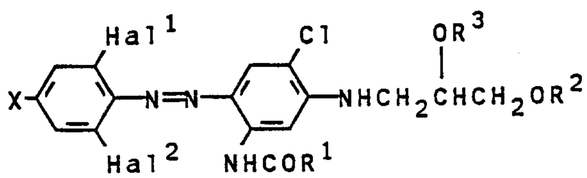

(II)

worin
$Hal^1$ und $Hal^2$ unabhängig voneinander Chlor oder vorzugsweise Brom bedeutet und $R^1$, $R^2$, X und n wie in Anspruch 1 angegeben definiert sind, einer nucleophilen Austauschreaktion unterwirft, wobei als nucleophiles Agenz das Cyanidion $CN^{\ominus}$ eingesetzt wird.

**9**. Verwendung der Monoazofarbstoffe der allgemeinen Formel I gemäß einem oder mehreren der Ansprüche 1, 2 und 5, beziehungsweise der Mischungen gemäß einem oder mehreren der Ansprüche 3 bis 7 zum Färben und Bedrucken von hydrophoben synthetischen Materialien.

**10**. Verwendung gemäß Anspruch 9, dadurch gekennzeichnet, daß Polyesterfasern oder Polyestertextilmaterialien für Automobilbezugsstoffe gefärbt oder bedruckt werden.

Europäisches Patentamt

# EUROPÄISCHER RECHERCHENBERICHT

Nummer der Anmeldung

EP 93 10 0630

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | EP-A-0 043 795 (CIBA-GEIGY AG.)<br>* Beispiele 133, 159, 161, 162 *<br>* Ansprüche *<br>--- | 1-10 | C09B29/085<br>C09B43/42<br>C09B67/22 |
| A | DE-A-2 916 137 (BAYER AG.)<br>* Ansprüche; Beispiel 12 *<br>----- | 1-10 | |
| | | | **RECHERCHIERTE SACHGEBIETE (Int. Cl.5 )** |
| | | | C09B |

Der vorliegende Recherchenbericht wurde für alle Patentansprüche erstellt

| Recherchenort | Abschlußdatum der Recherche | Prüfer |
|---|---|---|
| DEN HAAG | 25 MAERZ 1993 | GINOUX C.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)